# FASCICULE DE BREVET EUROPEEN

(11) **EP 0 559 503 B1**
(45) Date de publication et mention de la délivrance du brevet: **17.04.1996**
(21) Numéro de dépôt: 93400228.8
(22) Date de dépôt: 29.01.1993
(51) Int. Cl.: B23P 19/08

(54) **Dispositif de montage des segments sur tête de piston**
Vorrichtung zum Montieren von Ringen auf Kolbenköpfe
Device for placing rings on piston heads

(30) Priorité: 03.03.1992 FR 9202502
(43) Date de publication de la demande: 08.09.1993
(73) Titulaire: RENAULT AUTOMATION, F-92109 Boulogne-Billancourt (FR)
(72) Inventeur: Thurier, Yvan, F-94320 Thiais (FR); Dandy, Jean-Marc, F-91450 Etiolles (FR)
(74) Mandataire: Ernst-Schonberg, Michel

(56) Documents cités:
- EP-A- 0 452 166
- EP-A- 0 457 627
- JP-A- 2 075 745
- US-A- 2 792 625
- US-A- 4 084 727
- PATENT ABSTRACTS OF JAPAN vol. 007, no. 227 (M-248)(1372) 7 Octobre 1983 & JP-A-58 120 436 (HITACHI) 18 Juillet 1983

## Description

La présente invention concerne un dispositif de montage d'un jeu de segments sur une tête de piston de moteur thermique.

La publication FR-A-2630952 décrit une machine de distribution et de pose de segments sur les pistons de moteurs thermiques. Cette machine utilise des moyens d'amenée, d'expansion, de centrage et de mise en place des segments dans les gorges parallèles usinées sur les têtes des pistons.

Cette machine pose successivement les segments sur les pistons, ce qui nécessite une répétition des opérations de montage pour chaque segment. Il en résulte une limitation des cadences et une complexité du dispositif.

La présente invention se propose de remédier à l'inconvénient précité et a pour objet un dispositif de montage simultané d'un jeu de segments sur une tête de piston de moteur thermique. Le dispositif est constitué par un moyen d'amenée et de centrage du jeu de segments par rapport à la tête du piston et par un moyen d'expansion dudit jeu de segments disposés en coïncidence avec les gorges parallèles de la tête du piston.

Ce dispositif est caractérisé par le fait que le moyen d'expansion coopère à la déformation radiale simultanée des segments dans des logements de maintien respectivement portés par des supports coulissants dans les plans des gorges et qu'un dispositif d'effacement des moyens d'expansion coopère à la libération des segments et à leur rétraction dans les gorges.

D'autres caractéristiques et avantages de l'invention ressortiront de la description d'un exemple de réalisation du dispositif faite en référence aux dessins annexés dans lesquels :
- la figure 1 représente un piston et son jeu de segments,
- la figure 2 est une vue en plan des moyens d'amenée et de centrage des segments,
- la figure 3 est une coupe partielle du détail de réalisation des moyens d'amenée et de centrage des segments, selon la ligne III-III de la figure 2,
- la figure 4 est une coupe partielle du moyen d'expansion des segments représenté en position de repos,
- la figure 5 est une coupe partielle du moyen d'expansion des segments représenté en position de travail,

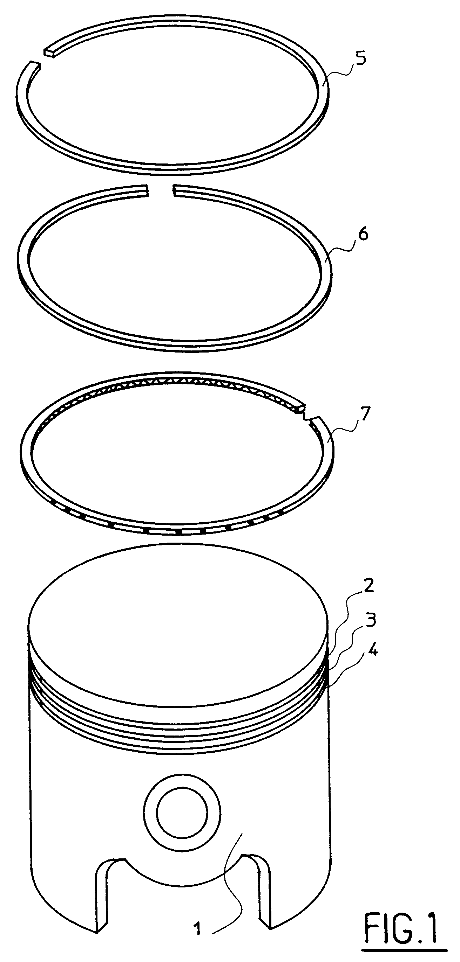

La figure 1 montre un piston 1 à trois gorges 2, 3, 4 destinées à recevoir les segments correspondants 5, 6, 7.

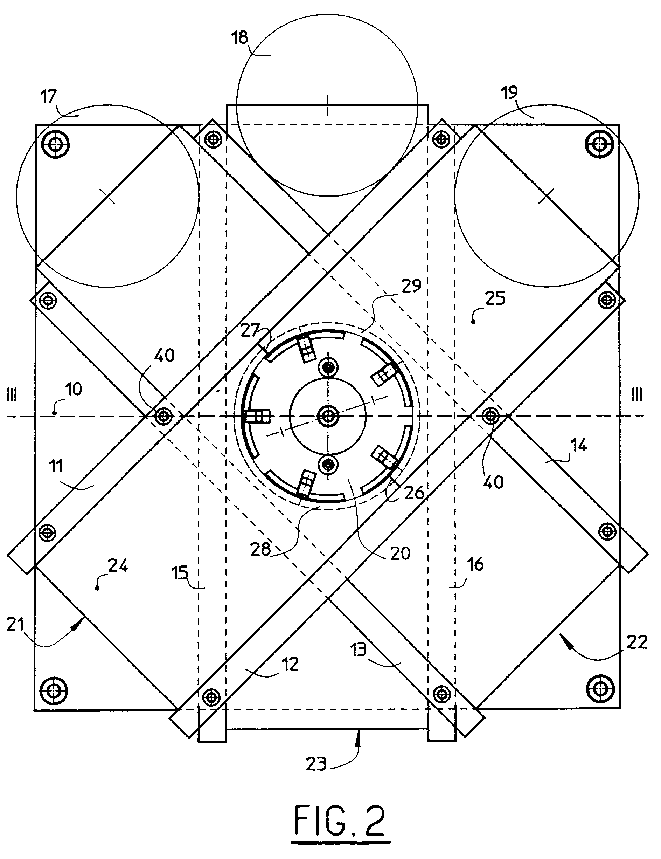

Selon la figure 2, le dispositif de montage des segments est constitué d'un bâti 10 sur lequel sont superposés trois jeux de glissières parallèles deux à deux ,11 et 12, 13 et 14, 15 et 16 ; lesdits jeux étant orientés à 45°. Les moyens de stockage des segments sont en 17, 18, 19. Au centre du bâti se trouve une ouverture circulaire 20 par laquelle est introduit le piston pour la pose des segments.

Les supports coulissants superposés 21, 22 et 23 sont de fonctionnalité identique. Pour simplifier la description, nous n'en décrirons qu'un seul. Le support coulissant 21 comprend deux demi-tiroirs 24, 25 qui sont accolables en 26, 27. Chaque demi-tiroir 24, 25 possède une surface annulaire 28, 29 conformée au segment concerné. Ces surfaces 28, 29 forment lorsque les demi-tiroirs sont accolés un logement circulaire qui reçoit le segment. Chaque surface annulaire 28, 29 est de dimension légèrement inférieure au diamètre du segment libre, de façon à le maintenir en place. Les deux demi-tiroirs sont actionnés par deux vérins alternatifs, indépendants et à plusieurs courses.

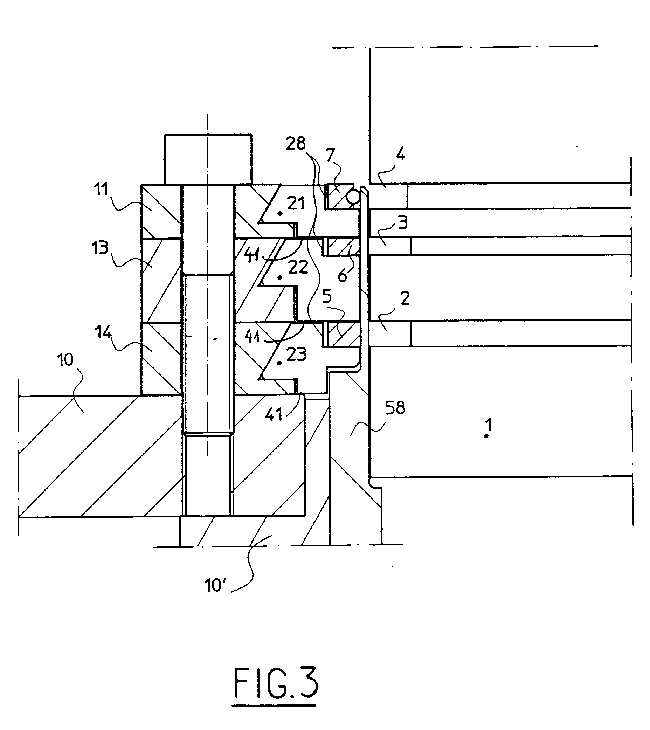

Selon la figure 3, on retrouve les glissières 11, 13, 14 à queues d'aronde, fixées par les vis 40 au bâti 10, 10'. Les glissières sont dimensionnées pour laisser un jeu 41 entre les supports coulissants 21, 22, 23 afin de permettre leur déplacement. Le jeu de segments 5, 6, 7 est maintenu dans les surfaces annulaires 28 des supports coulissants 21, 22, 23 qui sont en coïncidence avec les gorges 2, 3, 4 du piston 1, par les doigts arqués 58 du moyen d'écartement 50.

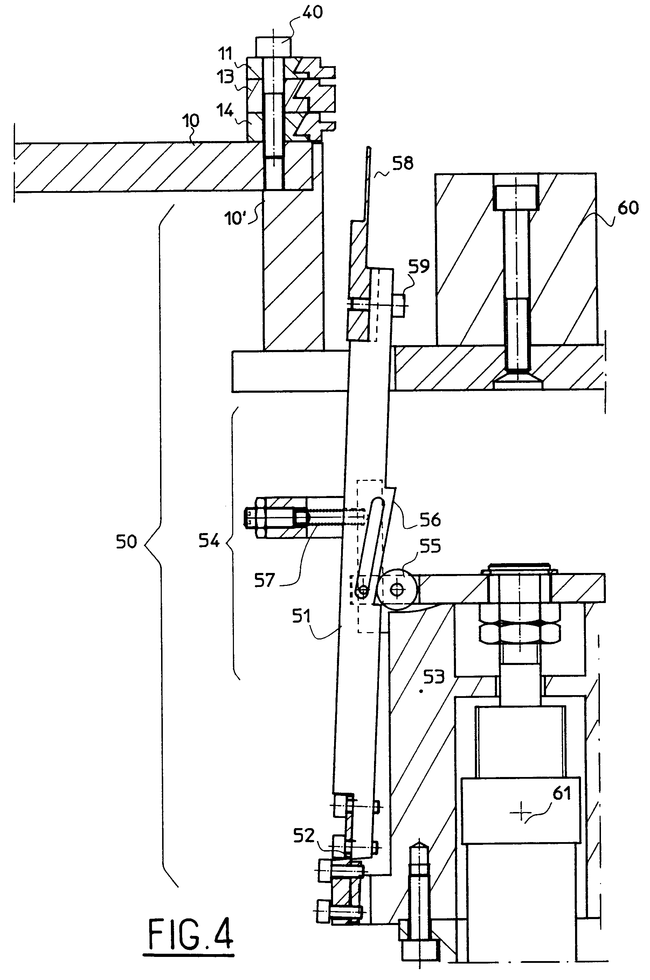

Selon la figure 4, le moyen d'expansion 50 du jeu de segments est représenté en position de repos. Il comprend d'une part cinq leviers 51 pivotants sur leurs bases 52 fixées au support 53 ; d'autre part un moyen à came 54 constitué d'un galet 55, d'une rampe 56 et d'un ressort d'appui 57 monté en contrainte. Les cinq doigts arqués 58 sont fixés par les vis 59 aux cinq leviers 51. En 60 se trouve la butée de positionnement du piston 1, actionnée par un vérin non représenté ici.

Le vérin 61 actionne le moyen à came 54, qui écarte le moyen d'expansion 50, tout en l'amenant dans la position de travail.

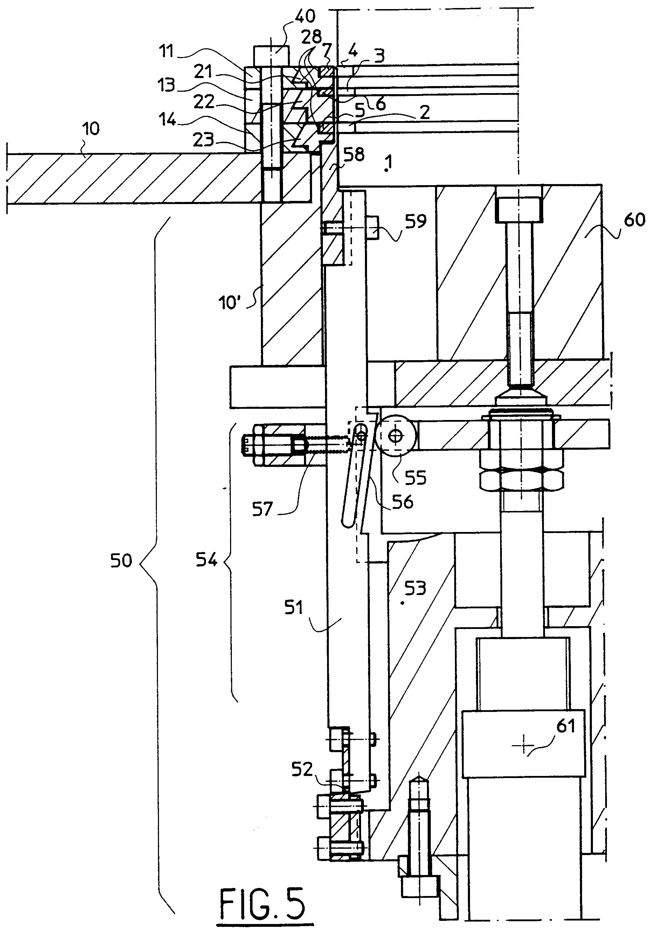

Selon la figure 5, le moyen d'expansion 50 du jeu de segments est représenté en position de travail. Sous l'action du vérin 61 et du moyen à came 54, le moyen d'expansion 50 s'est écarté et les doigts arqués 58 sont venus au contact des segments placés dans les supports coulissants 21, 22, 23 et y exercent leur force d'écartement. Le piston 1 est positionné sur la butée 60. Les segments 5, 6, 7 sont respectivement dans les plans des trois gorges 2, 3, 4 du piston.

Le fonctionnement du dispositif va être maintenant décrit en référence aux figures 2 à 5.

En début de cycle, actionnés par leurs vérins respectifs, les demi-tiroirs 24, 25 sont d'abord accolés puis amenés au lieu de stockage 19 pour y recevoir un segment dans le logement circulaire constitué des deux surfaces annulaires 28, 29. Les vérins centrent ensuite le support coulissant 21 contenant le segment sur l'axe du dispositif de montage. Il en est fait de même simultanément pour les deux autres supports et leurs segments respectifs (Figure 3).

Le moyen d'expansion 50, comprenant les doigts arqués 58, actionné par le vérin 61 commandé par un moyen détecteur de la position centrée de l'ensemble des supports, s'écarte progressivement sous l'action du moyen à came 54 tout en écartant légèrement également les supports coulissants 21, 22, 23. Le moyen d'expansion 50 vient alors se placer en position de travail (Figure 5).

Le piston 1 est ensuite descendu et positionné au moyen de la butée 60. Le jeu de segments 5, 6, 7 est alors en coïncidence avec les gorges 2, 3, 4 de la tête du piston. Le jeu de segments est maintenu en position par la pression radiale exercée par les doigts arqués 58.

Le moyen d'expansion 50 descend et démasque progressivement les gorges du piston dans lesquelles chaque segment successivement s'insère.

Les supports coulissants s'écartent alors suffisamment pour permettre l'évacuation du piston équipé de son jeu de segments.

Un moyen détecteur commande le vérin 61 et le moyen d'expansion 50 retrouve sa position de repos (Figure 4). Les demi-tiroirs 24 et 25 s'accolent et le cycle recommence (Figure 2).

Sans sortir du cadre de l'invention, il est possible d'orienter différemment les supports coulissants 21, 22 et 23 les uns par rapport aux autres et/ou de disposer les moyens de stockage 17, 18, 19 à l'une quelconque des deux extrêmités de la course desdits supports coulissants.

## Revendications

1. Dispositif de montage d'un jeu de segments sur une tête de piston de moteur thermique constitué par un moyen d'amenée et de centrage du jeu de segments par rapport à la tête de piston et par un moyen d'expansion dudit jeu de segments dans les gorges parallèles d'une tête de piston de moteur thermique, dans lequel le moyen d'expansion (50) coopère à la déformation radiale des segments (5, 6, 7) dans des logements de maintien (28 et 29) portés par des supports coulissants (21, 22, 23) dans les plans parallèles des gorges et qu'un dispositif d'effacement des moyens d'expansion coopère à la libération des segments et à leur rétraction dans les gorges, caractérisé par le fait que chaque support coulissant (21, 22, 23) est en deux parties accolées qui possèdent respectivement une surface de maintien annulaire conformée au segment et un organe d'actionnement alternatif à plusieurs courses en correspondance avec la préhension du segment sur un lieu de stockage, le centrage du segment sur la tête du piston et la libération du segment avant l'évacuation du piston.

2. Dispositif de montage d'un jeu de segments sur une tête de piston de moteur thermique selon la revendication 1, caractérisé par le fait qu'un moyen détecteur de la position centrée de l'ensemble des supports coopère avec un vérin (61) d'actionnement du moyen d'expansion du jeu de segments.

3. Dispositif de montage d'un jeu de segments sur une tête de piston de moteur thermique selon la revendication 2, caractérisé par le fait que la tige du vérin (61) d'actionnement porte un moyen à came de commande d'expansion des segments (54) et que ledit moyen à came est monté à déplacement sous l'action conjuguée de la tige du vérin et de la pression d'appui de la came.

4. Dispositif de montage d'un jeu de segments sur une tête de piston de moteur thermique selon la revendication 3, caractérisé par le fait que les moyens à cames sont disposés autour de la tige du vérin et prolongés individuellement par des doigts de commande d'expansion des segments.

## Claims

1. Device for mounting a set of rings on a piston head of a thermal engine constituted by a means for conveying and centring the set of rings with respect to the piston head and by a means for expansion of said set of rings in the parallel grooves of a piston head of a thermal engine, wherein the expansion means (50) cooperates in the radial deformation of the rings (5, 6, 7) in the retention housings (28 and 29) carried by sliding supports (21, 22, 23) in the parallel planes of the grooves and a device for cancelling the expansion means cooperates in the release of the rings and to their retraction in the grooves, characterised by the fact that each sliding support (21, 22, 23) is in two parts which meet together and are each provided with an annular retention surface corresponding to the ring and an alternating actuating means having several paths corresponding to the grasping of the ring on a storage point, the centring of the ring on the piston head and the release of the ring before removal of the piston.

2. Device for mounting a set of rings on a piston head of a thermal engine according to claim 1, characterised by the fact that a means for sensing the centred position of all of the supports cooperates with a jack (61) for actuating the means for expansion of the set of rings.

3. Device for mounting a set of rings on a piston head of a thermal engine according to claim 2, characterised by the fact that the rod of the actuating jack (61) carries a cam means for controlling expansion of the rings (54) and that said cam means is mounted so that it is moveable by the joint action of the jack rod and the bearing pressure of the cam.

4. Device for mounting a set of rings on a piston head of a thermal engine according to claim 3, characterised by the fact that the cam means are arranged around the jack rod and extended individually by fingers controlling expansion of the rings.

## Patentansprüche

1. Vorrichtung zum Montieren eines Satzes von Kolbenringen auf einem Kolbenkopf eines Verbrennungsmotors, bestehend aus einer Anordnung zur Zufuhr und zur Zentrierung des Satzes von Kolbenringen relativ zum Kolbenkopf und aus einer Anordnung zur Aufweitung des Satzes von Kolbenringen in parallelen Nuten des Kolbenkopfes des Verbrennungsmotors, wobei die Anordnung zur Aufweitung (50) eine radiale Verformung der Kolbenringe (5, 6, 7) in Halteaussparungen (28) und (29) bewirkt, die von gleitenden Halterungen (21, 22, 23) in Ebenen parallel zu den Nuten getragen werden und wobei eine Anordnung zur Rückstellung für die Anordnung zur Aufweitung eine Freigabe der Kolbenringe und ihr Einsetzen in die Nuten bewirkt, dadurch gekennzeichnet, daß jede gleitende Halterung (21, 22, 23) aus zwei zusammenhängenden Teilen besteht, die eine ringförmige, an den Kolbenring angepaßte Haltefläche und ein Teil zur alternativen Betätigung in verschiedene Richtungen entsprechend dem Ergreifen des Kolbenringes an einer Vorratsstelle, der Zentrierung des Kolbenringes am Kolbenkopf und der Freigabe des Kolbenringes vor dem Entfernen des Kolbenkopfes aufweist.

2. Vorrichtung zum Montieren eines Satzes von Kolbenringen auf einem Kolbenkopf eines Verbrennungsmotors nach Anspruch 1, dadurch gekennzeichnet, daß eine Detektoranordnung für die zentrierte Position der Gesamtheit der Halterungen mit einem Druckzylinder (61) zur Betätigung der Anordnung zur Aufweitung des Satzes von Kolbenringen zusammenwirkt.

3. Vorrichtung zum Montieren eines Satzes von Kolbenringen auf einem Kolbenkopf eines Verbrennungsmotors nach Anspruch 2, dadurch gekennzeichnet, daß die Betätigungsstange des Druckzylinders (61) eine Nockenanordnung (54) zur Steuerung der Aufweitung der Kolbenringe aufweist und daß diese Nockenanordnung verschiebbar unter der gemeinsamen Einwirkung der Druckzylinderstange und der Stützkraft des Nockens angeordnet ist.

4. Vorrichtung zum Montieren eines Satzes von Kolbenringen auf einem Kolbenkopf eines Verbrennungsmotors nach Anspruch 3, dadurch gekennzeichnet, daß die Nockenanordnung um die Druckzylinderstange herum angeordnet ist und einzeln durch Finger zur Steuerung der Aufweitung der Kolbenringe verlängert ist.
